# EUROPEAN PATENT APPLICATION

(11) **EP 4 640 499 A1**
(43) Date of publication of application: **29.10.2025**
(21) Application number: 23906739.0
(22) Date of filing: 07.12.2023
(51) Int. Cl.: B60R 21/36

(54) **AIRBAG DEVICE FOR PEDESTRIAN PROTECTION**

(30) Priority: 21.12.2022 JP 2022204446
(71) Applicant: Autoliv Development AB, 44783 Vargarda (SE)
(72) Inventor: HIRAOKA, Jun, Yokohama-shi, Kanagawa 222-8580 (JP); HANAWA, Akifumi, Yokohama-shi, Kanagawa 222-8580 (JP); ITO, Satoshi, Yokohama-shi, Kanagawa 222-8580 (JP); TAMURA, Atsushi, Yokohama-shi, Kanagawa 222-8580 (JP)
(74) Representative: Müller Verweyen
(86) International application number: PCT/JP2023/043742
(87) International publication number: WO 2024/135373

(57) **Abstract**

To provide a pedestrian protection airbag device capable of achieving both rapid expansion and deployment of an airbag cushion on one hand, and suppression of damage or the like to the airbag cushion on the other hand, and capable of easily responding to a demand that vehicles should cover wider areas to protect pedestrians. A pedestrian protection airbag device 10 includes: an airbag cushion 12 that expands and deploys outside a passenger compartment in the event of a vehicle collision; and a first inflator 14a and a second inflator 14b each of which, in the event of a vehicle collision, is activated to supply gas for expansion and deployment to the airbag cushion 12. The first inflator 14a and the second inflator 14b are different from each other in the timing of activation in the event of a vehicle collision.

## Description

### TECHNICAL FIELD

The present invention relates to an airbag device for protecting a pedestrian (pedestrian protection airbag device), which protects a pedestrian who is hit by a vehicle.

### BACKGROUND ART

For example, a pedestrian protection airbag device described in Patent Document 1 is mounted in the vicinity of a boundary portion between a bonnet and a windshield of a vehicle. When a collision between the vehicle and a pedestrian is detected, an inflator is activated, gas for expansion is supplied to an airbag cushion to expand and deploy the airbag cushion instantaneously. The expanded and deployed airbag cushion covers the rear side of the bonnet, the lower portion of the front end of the windshield, and the lower portions of the left and right A-pillars, thereby protecting the head of a pedestrian who has collided with the vehicle.

### RELATED ART DOCUMENTS

### PATENT DOCUMENTS

Patent Document 1: Japanese Unexamined Patent Application Publication No. 2020-100377.

### SUMMARY OF THE INVENTION

### PROBLEM TO BE SOLVED BY THE INVENTION

In the pedestrian protection airbag device, the airbag cushion expands and deploys to cover a relatively wide area, such as an area across the entire vehicle width. In consideration of a possible future demand to increase the area serving the protection of pedestrians, providing only a single inflator may take longer time to expand and deploy the airbag cushion leading to a delayed timing of pedestrian protection.

As a countermeasure to such a problem, it is conceivable to provide a plurality of inflators. Use of a plurality of inflators, however, may result in an excessively high internal pressure of the airbag cushion at the initial stage of its expansion and deployment. As a result, the sewn portion of the airbag cushion may be ruptured. In addition, the windshield may be damaged (glass may be broken) by the expanded and deployed airbag cushion.

An object of the present invention is to provide a pedestrian protection airbag device that can achieve both rapid expansion and deployment of an airbag cushion on one hand, and suppression of damage or the like to the airbag cushion on the other hand, and that can easily respond to a demand that vehicles should cover wider areas to protect pedestrians.

### MEANS FOR SOLVING THE PROBLEM

A pedestrian protection airbag device according to an aspect of the present invention includes: an airbag cushion that expands and deploys outside a passenger compartment in the event of a vehicle collision; and a plurality of inflators including a first inflator and a second inflator each of which, in the event of a vehicle collision, is activated to supply gas to the airbag cushion for allowing the airbag cushion to expand and deploy, wherein the timing of activation in the event of a vehicle collision is different between the first inflator and the second inflator.

According to this aspect, the first inflator and the second inflator that are activated at different timings can suppress a rapid pressure rise at the initial stage of expansion and deployment of the airbag cushion. Hence, damages to the airbag cushion can be reduced. In addition, in an event, for example, where the expanded and deployed airbag cushion abuts a portion of the vehicle (for example, the windshield) with great force, damage to that portion (for example, breaking of the glass) can be reduced. In addition, supplying the gas for expanding and deploying a single airbag cushion from the plurality of inflators allows the single airbag cushion to expand and deploy rapidly. Hence, such a configuration can easily respond to a demand that airbags should cover wider areas to protect pedestrians. The plurality of inflators preferably have the same capability, but inflators having different capabilities may be used.

### BRIEF DESCRIPTION OF THE DRAWINGS

FIG. 1 is a top view illustrating, together with a vehicle, a pedestrian protection airbag device according to Embodiment 1 in an activated (completely expanded and deployed) state.
FIG. 2 is an cross-sectional view taken along a line II-II in FIG. 1 and illustrating the pedestrian protection airbag device according to Embodiment 1 in a preactivated (i.e., not yet deployed) state.
FIG. 3 is an cross-sectional view taken along the line II-II in FIG. 1 and illustrating the pedestrian protection airbag device according to Embodiment 1 in the activated (completely expanded and deployed) state.
FIG. 4(A) is a is a plan view, as viewed from the upper surface side, of the airbag cushion according to Embodiment 1 in a laid flat state (a state where the airbag cushion has not yet expanded or deployed and where the airbag cushion has not yet been folded). FIG. 4(B) is a bottom view (i.e., a view as viewed from the back surface side) of the same airbag cushion in the same state.
FIG. 5 is a block diagram illustrating a control configuration of the pedestrian protection airbag device according to Embodiment 1.
FIG. 6 is a flowchart illustrating a controlling method of the pedestrian protection airbag device according to Embodiment 1.
FIG. 7 is a side view illustrating, together with a vehicle, a pedestrian protection airbag device according to Embodiment 2 in an activated (completely expanded and deployed) state.
FIG. 8 is a top view illustrating, together with a vehicle, a pedestrian protection airbag device according to Embodiment 3 in an activated (completely expanded and deployed) state.

### EMBODIMENTS OF THE INVENTION

### <Definition of Terms and Overview of Embodiments>

A pedestrian protection airbag device according to some preferred embodiments of the present invention will be described with reference to the accompanying drawings. In the present document, up and down, left and right, and front and rear are defined as follows. When a passenger is seated in a seat of a vehicle in a regular posture, the direction in which the passenger faces is referred to as the front, and the opposite direction is referred to as the rear, and a direction indicating a coordinate axis is referred to as the front-rear direction or vehicle front-rear direction. Furthermore, when the passenger is seated in the seat in a regular posture, the right side of the passenger is referred to as the right direction, the left side of the passenger is referred to as the left direction, and a direction indicating a coordinate axis is referred to as the left-right direction or vehicle width direction. Similarly, when the passenger is seated in a regular posture, a head direction of the passenger is referred to as up, a waist direction of the passenger is referred to as down, and a direction indicating a coordinate axis is referred to as an up-down direction.

A protection target of the pedestrian protection airbag device according to the embodiments is mainly a pedestrian or pedestrians, and the pedestrian or the pedestrians will be taken as an example in the following description. The protection target, however, is not limited thereto, and for example, not only a person riding a bicycle (i.e., a cyclist) and a person riding a motorcycle (motorbike) or the like, but also a person riding a skateboard, a kickboard, or the like is also included in the protection targets.

The pedestrian protection airbag device according to the embodiment includes: an airbag cushion that expands and deploys outside a passenger compartment in the event of a vehicle collision; and a plurality of inflators including a first inflator and a second inflator each of which, in the event of a vehicle collision, is activated to supply gas to the airbag cushion for allowing the airbag cushion to expand and deploy.

The "event of vehicle collision " mainly refers to an event when a vehicle collides with a pedestrian. The determination as to whether or not the vehicle has collided, whether or not the collision is against a pedestrian, and the like determination can be made based on a known method, for example, detection by a sensor (a pressure sensor or an acceleration sensor) installed in a bumper of the vehicle.

The term "outside the passenger compartment" means outside the passenger compartment of the vehicle. For example, the pedestrian protection airbag device is mounted in the vicinity of a boundary portion between a bonnet and a windshield of a vehicle, and the airbag cushion expands and deploys from the vicinity of the boundary portion toward the vehicle exterior side across an entire vehicle width. The expanded and deployed airbag cushion covers the rear side of the bonnet, the lower portion of the front end of the windshield, and at least the lower portions of the left and right A-pillars, thereby protecting the head of a pedestrian who has collided with the vehicle. The covered area of the A-pillar may be an area extending upward to an upper portion including an intermediate area located above the lower portion of the A-pillar, or may extend to cover the entire A-pillar.

However, in a different implementation, the pedestrian protection airbag device may be mounted at a position other than the vicinity of the boundary portion between the bonnet and the windshield. For example, the airbag cushion may be mounted on the front end side of the bonnet, and may expand and deploy in the vehicle width direction from the gap on the front end side of the bonnet to the upper side of the bonnet. In this case, the expanded and deployed airbag cushion covers the front side of the bonnet and/or a portion extending from the front side of the bonnet to a part of the rear side thereof, thereby protecting a pedestrian colliding with the vehicle.

Hereinafter, an example will be described in which the airbag cushion expands and deploys from the vicinity of the boundary portion between the bonnet and the windshield. **It** should be noted that the "bonnet" may be called a "hood." Furthermore, the "windshield" may be called a "front glass."

The airbag cushion is normally folded and accommodated within a housing. The folded airbag cushion has, for example, a roll shape, a bellows-like shape, or a combination thereof. In the event of a vehicle collision, the airbag cushion expands and deploys by gas supplied from a plurality of inflators. In the pedestrian protection airbag device of the present embodiment, the plurality of inflators activated at different timings to suppress the rapid pressure rise in the initial stage of the expansion and deployment of the airbag cushion but the airbag cushion can still expand and deploy rapidly. The plurality of inflators preferably have the same capability, but inflators having different capabilities may be used.

### <Embodiment 1>

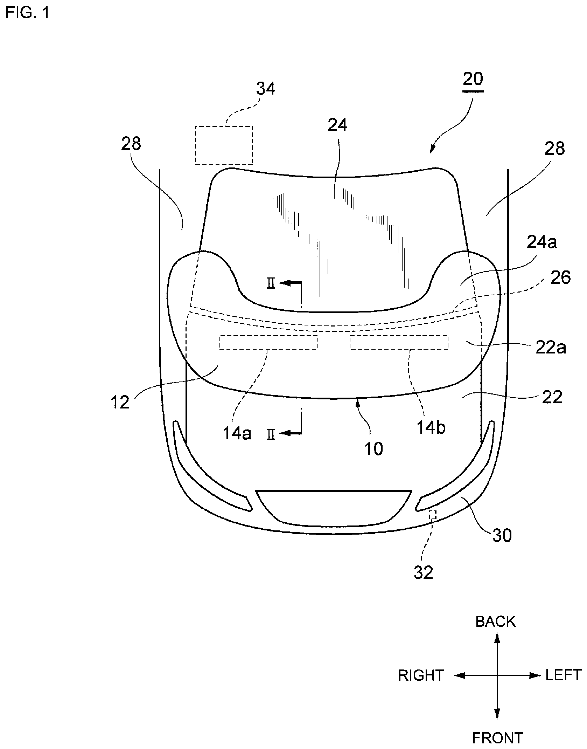

As illustrated in FIG. 1, a pedestrian protection airbag device 10 includes an airbag cushion 12 that expands and deploys outside the passenger compartment in the event of a vehicle collision. The airbag cushion 12 expands and deploys by the gas for expansion and deployment supplied thereto from a first inflator 14a and a second inflator 14b. At this time, the airbag cushion 12 expands and deploys from a boundary portion 26 between a bonnet 22 and a windshield 24 of a vehicle 20, covers a rear side 22a of the bonnet 22 and a front end lower portion 24a of the windshield 24, and covers lower portions of left and right A-pillars 28, 28. Although not particularly illustrated, the covered area of the A-pillar may be an area extending upward to an upper portion including an intermediate area located above the lower portion of the A-pillar, or may extend to cover the entire A-pillar.

A sensor 32 for detecting a vehicle collision is installed in a front bumper 30 of the vehicle 20. Various types of known sensors, such as an acceleration sensor and a pressure sensor, can be used as the sensor 32. The sensor 32 is connected to a controller 34, and a signal from the sensor 32 is inputted to the controller 34. The controller 34 determines whether or not the vehicle 20 has collided with a pedestrian based on the detection result of the sensor 32. Upon detection of a collision with a pedestrian, the controller 34 activates the inflators 14a and 14b to expand and deploy the airbag cushion 12.

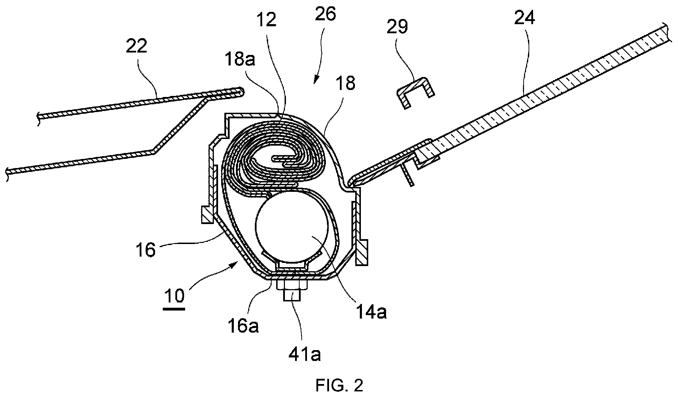

As illustrated in FIG. 2, the airbag cushion 12 is normally folded and accommodated within the housing 16. The housing 16 is formed of, for example, a shallow metal case having an opening on the upper side, and extends in the vehicle width direction. The opening of the housing 16 is covered with a cover 18, and a rupturable portion 18a formed of, for example, a perforation, a slit, a groove portion, or the like is formed in the cover 18. The rupturable portion 18a is to be torn apart by the expanded and deployed airbag cushion 12 so as to allow the airbag cushion 30 to easily eject upwards from the cover 18.

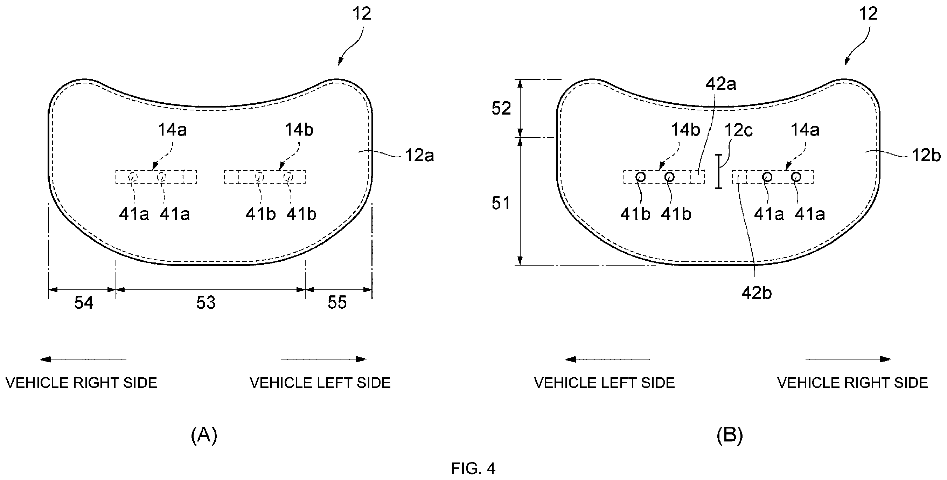

The inflators 14a and a 14b are fixed to a bottom wall portion 16a of the housing 16. By utilizing this fixing, the bottom portion of the airbag cushion 12 is also fastened to the bottom wall portion 16a of the housing 16. To be more specific, with the inflators 14a and 14b having been inserted into the airbag cushion 12, stud bolts 41a and 41b of the inflators 14a and 14b protrude outward from the bottom of the airbag cushion 12 (see FIG. 4(B)). To be more specific, the stud bolts 41a and 41b protrude downward from the bottom wall portion 16a, and are fastened and fixed to the lower surface of the bottom wall portion 16a with nuts. At this time, the bottom portion of the airbag cushion 12 is pressed against the top surface of the bottom wall portion16a by the inflators 14a, 14b. Thus, the airbag cushion 12 is fixed to the housing 16 together with the inflators 14a, 14b.

As described above, in the pedestrian protection airbag device 10 is configured as a modularized airbag device with the airbag cushion 12, the inflators 14a, 14b, the housing 16, and the cover 18. The housing 16 is fixed to a body of the vehicle 20 or to a bracket attached to the body, so that the pedestrian protection airbag device 10 is mounted on a boundary portion 26 between a bonnet 22 and a windshield 24. It should be noted that FIG. 2 illustrates also a windshield wiper 29.

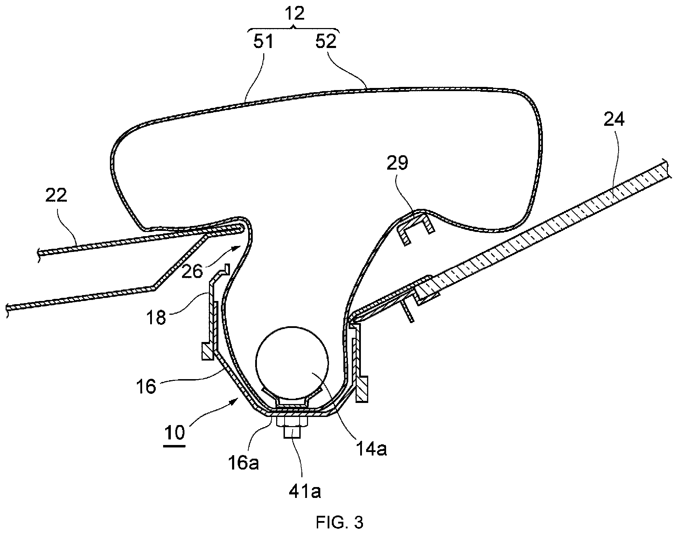

As shown in FIG. 3, the airbag cushion 12 ruptures the cover 18 when expanded and deployed, and then expands and deploys to the outside of the cover 18. The airbag cushion 12 includes a forward expandable portion 51 located on the bonnet 22 and a rearward expandable portion 52 located near the lower end of the windshield 24 in a side view of the airbag cushion 12 completely expanded and deployed. The airbag cushion 12 is configured with a single chamber with the forward expandable portion 51 and the rearward expandable portion 52 communicating with each other. The rearward expandable portion 52 is located in an area extending from the front end of the lower end portion of the windshield 24 to the rear of the lower end portion thereof so as to ride over the wiper 29.

FIG. 4 illustrates the airbag cushion 12 in a laid flat state (i.e., a state where the airbag cushion 12 has not yet expanded or deployed and where the airbag cushion has not yet been folded). The airbag cushion 12 is formed into a bag shape by a method of sewing or adhering one or a plurality of these base fabrics or the like at appropriate positions, or by a method of weaving using OPW (One-Piece Woven). By way of an example, the airbag cushion 12 is formed by sewing together a front base fabric 12a and a back base fabric 12b in their respective peripheral portions. Thereby, an air chamber (bag) is delineated between the front base fabric 12a and the back base fabric 12b, on an inner side from the portion where the front base fabric 12a and the back base fabric 12b are sewn together. Gas from the inflators 14a, 14b is supplied to the air chamber, such that a chamber delineating portion of the front and back base fabrics 12a, 12b expands and deploys.

As can be understood from a comparison with FIG. 1, the state illustrated in FIG. 4(A) is also a state resembling that of a top view of the airbag cushion 12 completely expanded and deployed. Therefore, once expanded and deployed completely, the airbag cushion 12 is understood to include, in a top view: a central expandable portion 53 located at a central portion in the vehicle width direction; and a pair of side expandable portions 54 and 55 located at both end portions in the vehicle width direction. The central expandable portion 53 and the pair of side expandable portions 54, 55 communicate with each other. The central expandable portion 53 covers the vicinity of the rear end portion of the bonnet 22 and the lower end portion in front of the windshield 24, both at the center in the vehicle width direction. Each of the pair of side expandable portions 54 and 55, on the other hand, has a shape protruding upward so as to further cover the lower portion of the corresponding one of the A-pillars 28, 28.

FIG. 4(B) also illustrates the regions of the forward expandable portion 51 and the rearward expandable portion 52 in a side view of the airbag cushion 12. Here, the area of the forward expandable portion 51 is larger than the area of the rearward expandable portion 52, but the ratio of the areas of these portions 51 and 52 can be changed as appropriate in accordance with the type of the vehicle or the like factors. For example, in the case of a small vehicle in which the collision position of the pedestrian reaches a position located further rear side of the vehicle on the bonnet, the area of the rearward expandable portion 52 can be made larger than that of the forward expandable portion 51.

Next, the inflators 14a, 14b will be described with reference to FIGS. 2 to 4.

Each of the inflators 14a, 14b is configured to be capable of suppling gas for expansion and deployment to the airbag cushion 12. The inflators 14a, 14b can be various types of inflators, such as inflators filled with a gas-generating agent, compressed gas, or both, and the like. Here, the inflators 14a, 14b used here have the same capabilities.

For example, the inflator 14a has a bottomed cylinder filled with a gas generating agent and an ignition device provided at the open end of the cylinder. The cylindrical body is provided with a plurality of (here, two) stud bolts 41a spaced apart in the axial direction of the cylindrical body, and the cylindrical body is secured to the housing 16 via these stud bolts 41a. In addition, a plurality of ejection holes are formed in the peripheral surface or in the bottom surface of the cylindrical body. By igniting the gas generating agent in the cylindrical body with the ignition device, gas is generated and the gas for expansion and deployment is supplied instantaneously into the airbag cushion 12 from a plurality of ejection holes.

The inflators 14a, 14b are accommodated in the airbag cushion 12. As illustrated in FIG. 4, the inflators 14a, 14b may be inserted into the airbag cushion 12 from the opening 12c of the airbag cushion 12. The opening 12c of this case is formed in a back base fabric 12b of the airbag cushion 12. A connector for facilitating electrical connection with the controller 34 is provided in each of the end portions 42a, 42b of the inflators 14a, 14b. A wire harness connected to the connectors is provided so as to exit the airbag cushion 12 to the outside thereof through the opening 12c. In addition, stud bolts 41a, 41b of the inflators 14a, 14b protrude to the outside of the airbag cushion 12 through open holes formed in back base fabric 12b.

As shown in FIG. 4, the inflators 14a and 14b are provided at different positions in the left-right direction (i.e., the vehicle width direction). For example, the inflators 14a and 14b are arranged without overlapping each other at all or with only partially overlapping each other in the vehicle width direction. Here, the inflators 14a and 14b are arranged on one side and on the other side of the centerline in the vehicle width direction without overlapping each other at all. In particular, the inflator 14a is disposed on the left side of the center of the vehicle 20 in the vehicle width direction, and the inflator 14b is disposed on the right side of the center of the vehicle 20 in the vehicle width direction.

The inflators 14a and 14b are disposed along the vehicle width direction. This means that the center position of the inflator 14a and the center position of the inflator 14b are located on a single line that is parallel to the vehicle width direction. In this case, the cylindrical inflators 14a and 14b are arranged such that the axes of the cylinders of the inflators 14a and 14b are aligned with the vehicle width direction. The ignition devices of the cylindrical inflators 14a and 14b (42a and 42b) are opposed to each other, and the bottom surfaces of the cylinders (where, for example, the ejection holes are formed) are oriented toward the outside of the vehicle in the vehicle width direction.

In a different implementation, when the inflators 14a and 14b are disposed along the vehicle width direction, the attitudes or the orientations of the inflators 14a and 14b may not be parallel to the vehicle width direction. In addition, when the inflators 14a and 14b are not disposed along the vehicle width direction, the positions of the inflators 14a and 14b in the vehicle front-rear direction are different from each other.

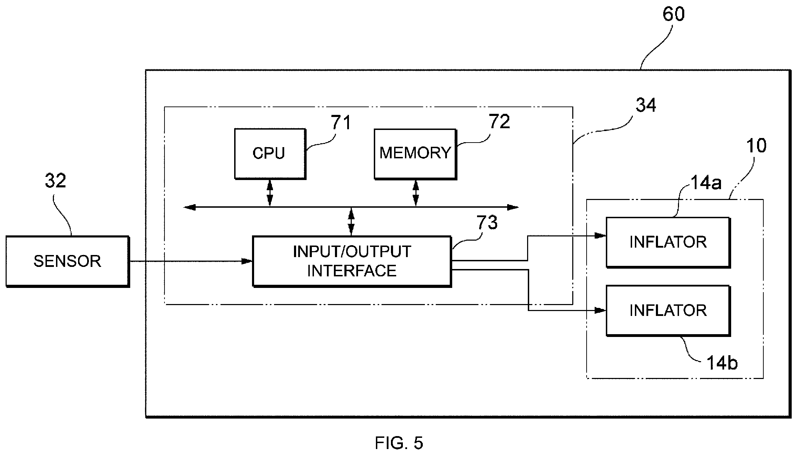

FIG. 5 illustrates a control configuration 60 of the pedestrian protection airbag device 10, including the inflators 14a and 14b. The controller 34 provided in the pedestrian protection airbag device 10 is an electronic control unit (ECU) that includes a CPU 71, a memory 72, and an input/output interface 73, and is configured as, for example, a microcomputer. The CPU 71 executes a desired operation in accordance with a control program to perform various processes and controls. A memory 72 includes, for example, a ROM and a RAM. The ROM stores control programs and control information to be processed by the CPU 71, and the RAM is mainly used as the work area where various types of operations for control processing are performed. An input/output interface 73 is electrically connected to the sensor 32 and the inflators 14a and 14b. With this configuration, the controller 34 receives input of signals from the sensors 32, and outputs activation signals to the inflators 14a and 14b when it is determined that the vehicle 20 has collided with a pedestrian.

The controller 34 may be configured as an airbag ECU capable of communicating with the vehicle-side ECU, and may control the activations of the inflators 14a and 14b of the pedestrian protection airbag device 10, as well as those of the inflators of other airbag devices (e.g., a front airbag device, a curtain airbag device, etc.).

In a different implementation, the vehicle-side ECU may determine whether the vehicle 20 has collided with a pedestrian, and the controller 34 may receive collision information from the vehicle-side ECU and output an activation signal to the inflators 14a and 14b.

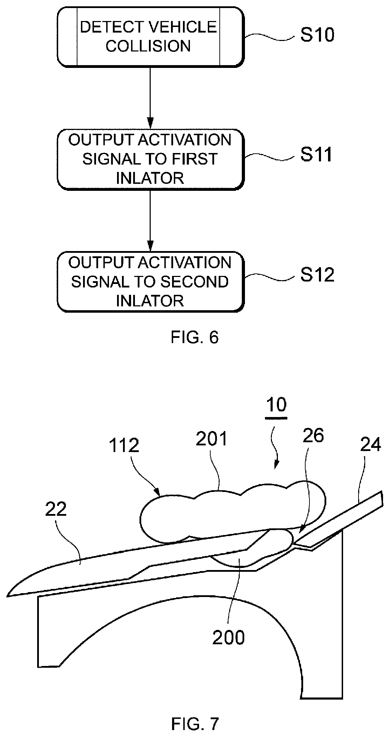

FIG. 6 is a flowchart illustrating a controlling method of the pedestrian protection airbag device 10. This control method is executed by the controller 34 when it is determined that the vehicle 20 has collided with a pedestrian (in the event of vehicle collision: S10).

In this control method, the inflators 14a and 14b are activated at different timings. That is, the inflator 14a is activated at a first timing, and the inflator 14b is activated at a second timing that is different from the first timing. In this case, the controller 34 changes the timings of outputting the activation signals so that the second inflator 14b is activated later than the first inflator 14a. To be more specific, first, an activation signal for supplying gas for expansion and deployment from the first inflater 14a to the airbag cushion 12 is outputted (S11), and then an activation signal for supplying gas for expansion and deployment from the second inflater 14b to the airbag cushion 12 is outputted (S12).

Here, the difference in the timing of activation of the inflators 14a and 14b (delay time of ignition) may be, for example, 5 to 20 msec. This is because if the difference is less than 5 msec, the inflators 14a and 14b are activated almost simultaneously, and the internal pressure of the airbag cushion 12 may rise excessively at the initial stage of expansion and expansion of the airbag cushion 12. Further, if the 20 msec is exceeded, the rise in the internal pressure at the initial stage of expansion and expansion of the airbag cushion 12 may be insufficient. In particular, the expansion and deployment may be delayed on one side of the airbag cushion 12 in the vehicle width direction. As a result, the timing of pedestrian protection is delayed, resulting in an inappropriate pedestrian protection.

A delay in a range of 5 to 20 msec can suppress a rapid pressure rise in the initial stage of expansion and deployment of the airbag cushion 12 (that is, can lower the peak value of the internal pressure). In addition to this, the airbag cushion 12 can be rapidly expanded and deployed. In particular, the airbag cushion 12 can be expanded and deployed as a whole while suppressing variation in the amount of expansion and deployment among various portions in the vehicle width direction, which leads to appropriate pedestrian protection.

Within the range of 5 to 20 msec, 10 msec or 10 msec +/- 1 msec is preferable. It should be noted that this delay time is greatly affected by the type and the capability of the inflator to be used.

As described above, the pedestrian protection airbag device 10 of the present embodiment includes: the airbag cushion 12 that expands and deploys outside the passenger compartment in the event of a vehicle collision; and the plurality of inflators including the first inflator 14a and the second inflator 14b each of which is activated in the event of a vehicular collision to supply gas for expansion and deployment to the airbag cushion 12 with the first inflator 14a and the second inflator 14b being activated at different timings in the event of a vehicle collision.

Such a configuration capable of suppressing a rapid pressure rise at the initial stage of expansion and deployment of the airbag cushion 12 can reduce the damage (such as rupture of the sewn portion) to the airbag cushion 12. Thus, the airbag cushion 12 does not need a reinforcement that may otherwise be necessary in consideration of the higher output by the plurality of inflators. In addition, in an event where the expanded and expanded airbag cushion 12 abuts a portion of the vehicle 20 (e.g., the windshield 24) with great force, damage to that portion (for example, breaking of the glass) can be reduced. Therefore, both rapid expansion and deployment of the airbag cushion 12 on one hand and the suppression of damage or the like to the airbag cushion 12 on the other hand can be achieved. In addition, such a configuration can satisfy the pedestrian head protection capability and can easily respond to a demand that airbags should cover wider areas to protect pedestrians.

In this embodiment, the inflators 14a and 14b have the same capability. Therefore, for example, the configuration and the control can be simplified.

In the present embodiment, the inflators 14a and 14b are disposed at different positions in the vehicle width direction. Therefore, it is possible to suppress variation in the amount of expansion and deployment in various portions of the airbag cushion 12 along the vehicle width direction.

The inflators 14a and 14b are disposed along the vehicle width direction. Therefore, it is also possible to suppress variation in the amount of expansion and deployment in various portions of the airbag cushion 12 in the vehicle front-rear direction. In particular, in the case where the cylindrical inflators 14a and 14b are disposed so that the igniting devices thereof face each other and the bottom surfaces of the cylinders having the ejection holes formed therein are outward in the vehicle width direction, the expansion and deployment gas can be oriented to the pair of side expandable portions 54 and 55 of the airbag cushion 12.

Next, other embodiments will be described. Note that another embodiment will be described with a focus on differences from the Embodiment 1. Configurations common to the Embodiment 1 will be denoted by the same or similar reference numerals and descriptions thereof will be omitted.

### <Embodiment 2>

With reference to FIG. 7, description is provided about an airbag device 10 according to Embodiment 2. As shown in FIG. 7, an airbag cushion 112 according to the Embodiment 2 may include a sub-chamber 200 that expands and deploys below the bonnet 22. To put it differently, the airbag cushion 112 may have the configuration of the airbag cushion 12 according to Embodiment 1 as a main chamber 201, and may have a configuration in which the sub-chamber 200 communicates with the lower side of the main chamber 201.

**In** this case, the inflators 14a and 14b (not illustrated in FIG. 7) can be inserted into the sub-chamber 200 and are fixed to the housing at the positions in a boundary portion 26, for example. The gas for expansion and deployment from the inflators 14a and 14b is firstly supplied to the sub-chamber 200, and then to the main chamber 201 through the communication portion between the sub-chamber 200 and the main chamber 201. The positional relationship between the inflators 14a and the 14b within the sub-chamber 200 may be the same as the positional relationship between the inflators 14a and the 14b in Embodiment 1.

### <Embodiment 3>

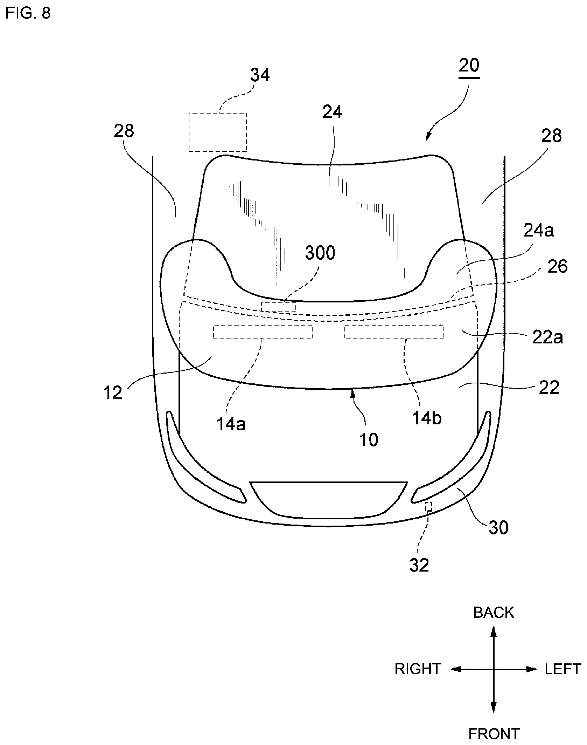

With reference to FIG. 8, description is provided about the activation timings of inflators 140a and 140b in the case where a pedestrian protection airbag device 10 according to Embodiment 3 has a fragile portion 300 that is present in the vehicle 20. The fragile portion 300 refers to, for example, a portion of the vehicle structure that is more likely to deform or move due to the influence of the expanded and deployed airbag cushion 12 than other portions of the vehicle 20.

In some examples, the fragile portion 300 is forced to move, by being contacted by the expanded and deployed airbag cushion 12 and/or by a part of the cover 18 ruptured by the expanded and deployed airbag cushion 12, to the front end portion of the windshield 24 or the vicinity of the front end portion thereof with its original shape either maintained or deformed. An example of such a fragile portion 300 is a portion that is different from the windshield 24, for example, a wiper or a portion related thereto (for example, a wiper panel, a wiper guard, a wiper link, etc.) in a case of a wiper link is located at a position biased to a side of the vehicle.

When such a fragile portion 300 is present, the inflators 140a and 140b may be activated so that one of the inflators 140a and 140b that is farther away from the fragile portion 300 can be activated first. For example, in a case where the fragile portion 300 is located in the vicinity of the front end of the windshield 24 and on a first side (e.g., the right side) of the center, in the vehicle width direction, of the windshield 24 in the vehicle 20, the inflator 140b located on a second side (e.g., the left side) that is opposite to the first side is activated earlier than the inflator 140a. This makes it easy to suppress the destruction of the fragile portion 300 when the expanded and deployed airbag cushion 12 itself and/or a part of the ruptured cover 18 comes into contact with the fragile portion 300. Therefore, the harmful effect of this destruction on the windshield 24 (for example, glass breakage due to the destroyed portion of the wiper link colliding with the windshield 24) can be suppressed.

In some other examples, the fragile portion 300 may be a part of the windshield 24. Often, the windshield 24 is generally asymmetric in the left-right direction, and either the left or right portion of the front end portion of the windshield 24 may protrude (extend long) frontward of the vehicle body. This portion is more likely to come into contact with the expanded and deployed airbag cushion 12 and/or with a portion of the cover 18 ruptured by the expanded and deployed airbag cushion 12, and therefore. Thus, the protruding portion may be a portion where the glass is more likely to be broken.

Also in the case where such a fragile portion 300 is present, the inflators 140a and 140b may be activated similarly to the above-described case so that one of the inflators 140a and 140b that is farther away from the fragile portion 300 can be activated first. In this way, similarly, when the expanded and deployed airbag cushion 12 itself and/or a part of the ruptured cover 18 comes into contact with the fragile portion 300 (here, the protruding one of the left and right portions of the front end portion of the windshield 24), the damage (glass breakage) of the fragile portion 300 can be suppressed.

**It** should be noted that the location of and the harmful effect on the fragile point 300 may vary significantly depending on the vehicle layout.

The embodiments described above are for ease of understanding of the present invention and are not intended to be construed as limiting the present invention. The features of each embodiment can be combined with each other. In addition, elements included in the embodiments, as well as arrangements, materials, conditions, shapes, sizes and the like thereof, are not limited to those exemplified, but rather can be appropriately changed.

For example, three or more inflators may be provided as long as at least two inflators are provided. Preferably, all of the plurality of inflators have the same capability, and the timing of activation in the event of vehicle collision may be different from one another. For example, three inflators having the same capability may be disposed along the vehicle width direction, and one or both of the side inflators in the vehicle width direction may be activated before the inflator at the center in the vehicle width direction. As another example, the capabilities of the plurality of inflators may be set to be different from one another. In this case, setting a smaller gas generating capacity for the inflator that is activated first than the corresponding capacity of the inflator that is activated later, damage to the vehicle body can be reduced more effectively.

### <Additional Considerations for Various Implementations>

### [Implementation 1]

A pedestrian protection airbag device provided with an airbag cushion that expands and deploys outside a passenger compartment in the event of a vehicle collision, the pedestrian protection airbag device comprising:
a plurality of inflators including a first inflator and a second inflator, each of which is activated in the event of a vehicle collision to supply, to the airbag cushion, gas for expansion and deployment, wherein
the first inflator and the second inflator have the same capability and wherein the first inflator and the second inflator are different from each other in activation timing in the event of a vehicle collision.

### [Implementation 2]

The pedestrian protection airbag device according to Implementation 1, wherein the first inflator and the second inflator have the same capability.

### [Implementation 3]

The pedestrian protection airbag device according to Implementation 1 or 2, wherein the first inflator and the second inflator are provided at different positions in a vehicle width direction.

### [Implementation 4]

The pedestrian protection airbag device according to Implementation 3, wherein when viewed from a front side of a vehicle,
the first inflator is located on a right side, in the vehicle width direction, of a center of the vehicle, and
the second inflator is located on a left side, in the vehicle width direction, of the center of the vehicle.

### [Implementation 5]

The pedestrian protection airbag device according to any one of Implementations 1 to 4, wherein the first inflator and the second inflator are disposed along a vehicle width direction.

### [Implementation 6]

The pedestrian protection airbag device according to any of Implementations 1 to 5, wherein, the airbag cushion is configured to expand and deploy from a boundary portion between a bonnet of a vehicle and a windshield thereof at least across an entire vehicle width, and
wherein when a fragile portion is located in a vicinity of a lower end of the windshield and on a first side of a vehicle with respect to a center in a vehicle width direction when viewed from a front side of the vehicle, one of the first inflator and the second inflator that is located on a second side opposite to the first side is activated first.

### [Implementation 7]

The pedestrian protection airbag device according to Implementation 6, wherein the fragile portion is a portion of a vehicle structure that is more likely to be deformed or moved by an influence of the expanded and deployed airbag cushion.

### [Implementation 8]

The pedestrian protection airbag device according to any one of Implementations 1 to 5, wherein the airbag cushion is configured to expand and deploy from a boundary portion between a bonnet of a vehicle and a windshield thereof.

### [Implementation 9]

The pedestrian protection airbag device according to any one of Implementations 1 to 8, wherein a difference in timing of activation between the first inflator and the second inflator in the event of a collision is 5 to 20 msec.

### [Implementation 10]

The pedestrian protection airbag device according to any one of Implementations 1 to 9, further comprising a controller connected to the first inflator and the second inflator, wherein
the controller, in the event of a vehicle collision,
outputs an activation signal to the first inflator so as to activate the first inflator at a first timing and
outputs an activation signal to the second inflator so as to activate the second inflator at a second timing that is different from the first timing.

### [Implementation 11]

A method for controlling a pedestrian protection airbag device including: an airbag cushion that expands and deploys outside a passenger compartment in the event of a vehicle collision; a first inflator and a second inflator having the same capability; and a controller connected to the first inflator and the second inflator, the method comprising,
in the event of a vehicle collision,
causing the controller to: output an activation signal to cause the first inflator to supply gas for expansion and deployment to the airbag cushion; and output an activation signal to cause the second inflator to supply gas for expansion and deployment to the airbag cushion so as to activate the second inflator later than the first inflator.

### [Implementation 12]

The method for controlling a pedestrian protection airbag device according to Implementation 11, wherein the second inflator is activated with a delay of 5 to 20 msec from the first inflator.

### [Implementation 13]

The pedestrian protection airbag device according to Implementaion 11, wherein the airbag cushion is configured to expand and deploy from a boundary portion between a bonnet of a vehicle and a windshield thereof at least across an entire vehicle width, and
wherein the first inflator and the second inflator are disposed along a vehicle width direction.

### DESCRIPTION OF REFERENCE NUMERALS

10: pedestrian protection airbag device; 12: airbag cushion; 12a: front base fabric; 12b: back base fabric; 12c: opening; 14a: first inflator; 14b: second inflator; 16: housing; 16a: bottom wall portion; 18: cover; 18a: rupturable portion; 20: vehicle; 22: bonnet; 22a: rear side; 24: windshield; 24a: front end lower portion; 26: boundary portion; 28: A-pillar; 29: windshield wiper; 30: front bumper; 32: sensor; 34: controller; 41a and 41b: stud bolts; 51: forward expandable portion; 52: rearward expandable portion; 53: central expandable portion; 54 and 55: side expandable portions; 60: control configuration; 71: CPU; 72: memory; 73: input/output interface; 112: airbag cushion; 140a and 140b: inflators; 200: sub-chamber; 201: main chamber; 300: fragile portion

## Claims

1. A pedestrian protection airbag device provided with an airbag cushion that expands and deploys outside a passenger compartment in the event of a vehicle collision, the pedestrian protection airbag device comprising:
a plurality of inflators including a first inflator and a second inflator, each of which is activated in the event of a vehicle collision to supply, to the airbag cushion, gas for expansion and deployment, wherein
the first inflator and the second inflator are different from each other in activation timing in the event of a vehicle collision.

2. The pedestrian protection airbag device according to Claim 1, wherein the first inflator and the second inflator have the same capability.

3. The pedestrian protection airbag device according to Claim 1, wherein the first inflator and the second inflator are disposed at positions that are different from each other in a vehicle width direction.

4. The pedestrian protection airbag device according to Claim 3, wherein when viewed from a front side of a vehicle,
the first inflator is located on a right side, in the vehicle width direction, of a center of the vehicle, and
the second inflator is located on a left side, in the vehicle width direction, of the center of the vehicle.

5. The pedestrian protection airbag device according to Claim 1, wherein the first inflator and the second inflator are disposed along a vehicle width direction.

6. The pedestrian protection airbag device according to Claim 1, wherein the airbag cushion is configured to expand and deploy from a boundary portion between a bonnet of a vehicle and a windshield thereof at least across an entire vehicle width, and
wherein when a fragile portion is located in a vicinity of a front end of the windshield and on a first side of a vehicle with respect to a center in a vehicle width direction when viewed from a front side of the vehicle, one of the first inflator and the second inflator that is located on a second side opposite to the first side is activated first.

7. The pedestrian protection airbag device according to Claim 6, wherein the fragile portion is a portion of a vehicle structure that is more likely to be deformed or moved by an influence of the expanded and deployed airbag cushion.

8. The pedestrian protection airbag device according to any one of Claims 1 to 5, wherein the airbag cushion is configured to expand and deploy from a boundary portion between a bonnet of a vehicle and a windshield thereof.

9. The pedestrian protection airbag device according to any one of Claims 1 to 7, wherein a difference in timing of activation between the first inflator and the second inflator in the event of a vehicle collision is 5 to 20 msec.

10. The pedestrian protection airbag device according to any one of Claims 1 to 7, further comprising a controller connected to the first inflator and the second inflator, wherein the controller, in the event of a vehicle collision,
outputs an activation signal to the first inflator so as to activate the first inflator at a first timing and
outputs an activation signal to the second inflator so as to activate the second inflator at a second timing that is different from the first timing.

11. A method for controlling a pedestrian protection airbag device including: an airbag cushion that expands and deploys outside a passenger compartment in the event of a vehicle collision; a first inflator and a second inflator having the same capability; and a controller connected to the first inflator and the second inflator, the method comprising,
in the event of a vehicle collision,
causing the controller to: output an activation signal to cause the first inflator to supply gas for expansion and deployment to the airbag cushion; and
output an activation signal to cause the second inflator to supply gas for expansion and deployment to the airbag cushion so that the second inflator is activated later than the first inflator.

12. The method for controlling a pedestrian protection airbag device according to Claim 11, wherein the second inflator is activated with a delay of 5 to 20 msec from the first inflator.

13. The method for controlling a pedestrian protection airbag device according to Claim 11 or Claim 12, wherein the airbag cushion is configured to expand and deploy from a boundary portion between a bonnet of a vehicle and a windshield thereof at least across an entire vehicle width, and
wherein the first inflator and the second inflator are disposed along a vehicle width direction.
